# EUROPEAN PATENT SPECIFICATION

(11) **EP 0 450 746 B1**
(45) Date of publication and mention of the grant of the patent: **29.03.1995**
(21) Application number: 91300588.0
(22) Date of filing: 25.01.1991
(51) Int. Cl.: A21C 11/10, B29C 69/00

(54) **Apparatus for cutting and shaping a spherical body**
Vorrichtung zum Schneiden und Formen eines kugelförmigen Körpers
Appareil de découpage et de façonnage d'un corps sphérique

(30) Priority: 30.03.1990 JP 85833/90
(43) Date of publication of application: 09.10.1991
(73) Proprietor: RHEON AUTOMATIC MACHINERY CO. LTD., Utsunomiya-shi Tochigi-ken (JP)
(72) Inventor: Tashiro, Yasunori, Utsunomiya-shi Tochigi-ken (JP)
(74) Representative: Leale, Robin George

(56) References cited:
- EP-A- 0 247 826
- DE-C- 272 176
- NL-A- 6 501 749

## Description

The present invention is concerned in general with apparatus for cutting and shaping a spherical body. It is particularly useful for shaping a substantially round food product consisting of dough and filling material without generating the problems of material adhesion and a rough or uneven dough thickness as well as the problem of filling protruding from the dough.

Various methods have been disclosed of cutting and shaping an enveloped bun-like body by using a continuously fed two-layer material such as is disclosed in U.S. Patent No. 4,734,024. For instance, it discloses an apparatus for shaping a round body consisting of a dough coating and a filling, which comprises an assembly comprising a plurality of circumferentially disposed members combined to shape a spheroidal body. Each of the members has at least two sliding surfaces, and they are so combined that a sliding surface of one member is slidable on a sliding surface of another member, that by sliding the members an opening is formed or closed in the center of the assembly, and that the opening is confined by walls consisting of the inwardly exposed part of the sliding surfaces of the members and is of a cross-sectional area, when the opening is fully open, sufficient to pass a descending cylindrical body.

While shaping a spheroidal body by the assembly of slidable members is effective, particularly in precluding a member from intruding into the body, and thereby breaking the outer layer of the cylindrical body, it has certain disadvantages. Because of the structural conditions of the assembly, the number of the slidable members is limited up to about six, so that only polygonally-shaped products have been obtained. However, their external appearance falls far below that of hand-shaped spherical products. Although cutting and shaping spherical products is possible without exposing their fillings, due to mechanical and dimensional imperfections in both the slidable members and in their assembly, a rough and uneven outer cover is formed when a bar-shaped dough is cut. If a product with an even and smooth outer cover is to be produced, the product must be finished through additional manual work, or the like. Further there was also some difficulty in preventing materials from adhering to the member, in completely precluding fillings from being exposed, or in providing an outer cover of a uniform thickness.

Accordingly, it is an object of the subject invention to provide an improved apparatus for cutting and shaping a substantially spherical product.

It is another object of the subject invention to provide an improved apparatus for cutting and shaping a spherical product using a new shutter or iris assembly mechanism, which precludes materials from adhering to the members, due to new and specially designed shutter members, and which produces a uniform and smooth outer cover by using new and specially designed driving mechanisms and shutter members.

EP-A-0 430 396, which is relevant under Article 54(3) EPC, discloses a similar arrangement to that defined in claim 1 with the exception of the feature of the thickness of the side surface of each apparatus member which contacts the material being cut and shaped decreasing towards the member's tip at a non-uniform rate.

From DE-C-272 176 it is known to provide apparatus for cutting and shaping a spherical material, comprising an assembly consisting of a plurality of identically-shaped shutter members, pivotally fitted to fulcrums that are equidistantly disposed on a circle so that the members form an opening at the center of the circle when each member pivots away from the center of the circle, and the members close the opening when each member pivots towards the center of the circle, thereby to cut and shape material passing through the opening, wherein each of the members has first and second curved side surfaces that are opposite to each other, and abut each other at a tip positioned at the opposite end of the member to its fulcrum, the first curved surface in use contacting the material passing through the opening.

The present invention is characterised by both the first and the second curved side surfaces being so defined that each of them is an arc of a circle with a radius equal to the distance between adjacent fulcrums, and when the tip of each member is at the center of the fulcrum circle, the center of the arc of the first curved side surface of each member is at the same time located at a distance from the member's fulcrum equal to the radius of the fulcrum circle and at a distance from the center of the fulcrum circle equal to the distance between adjacent fulcrums, and the center of the arc of the second curved side surface is at the same time located at a distance from the fulcrum of the next member, in the direction going from the first to the second side surfaces, equal to the radius of the fulcrum circle and at a distance from the center of the fulcrum circle equal to the distance between adjacent fulcrums, said members being associated with each other such that when the members make a pivotal movement, the part near the tip of the second curved side surface of each member slides over the first curved side surface of an adjacent member, the thickness of the first side surface decreasing towards its tip at a non-uniform rate.

In a preferred embodiment, each of the members used in the apparatus of this invention has a uniform thickness, except for the area near the tip thereof, where the thickness decreases towards it.

In other preferred embodiments, the material contacting margins of the first side surface are bevelled or have convex cross sections.

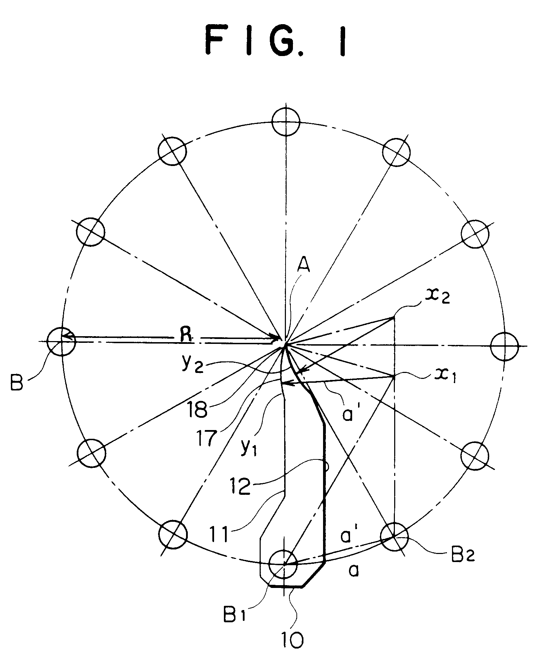

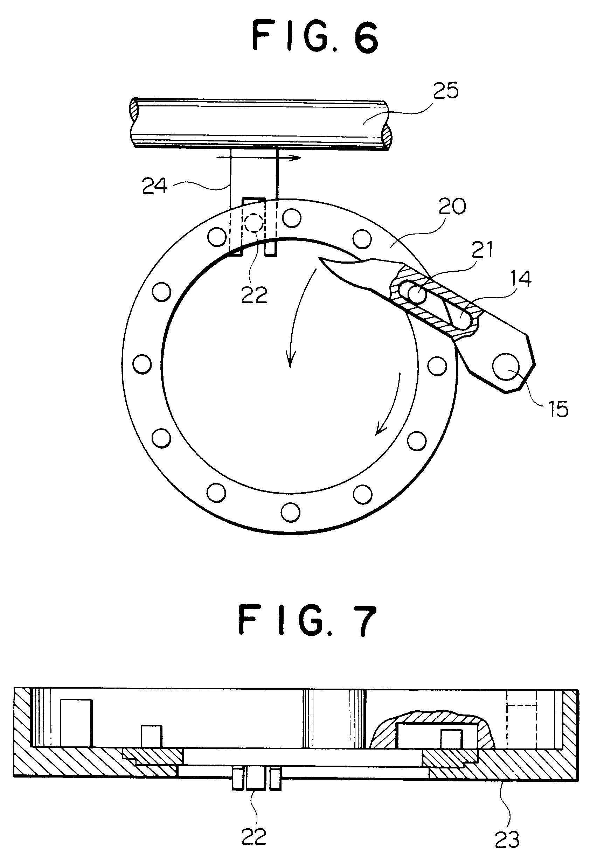

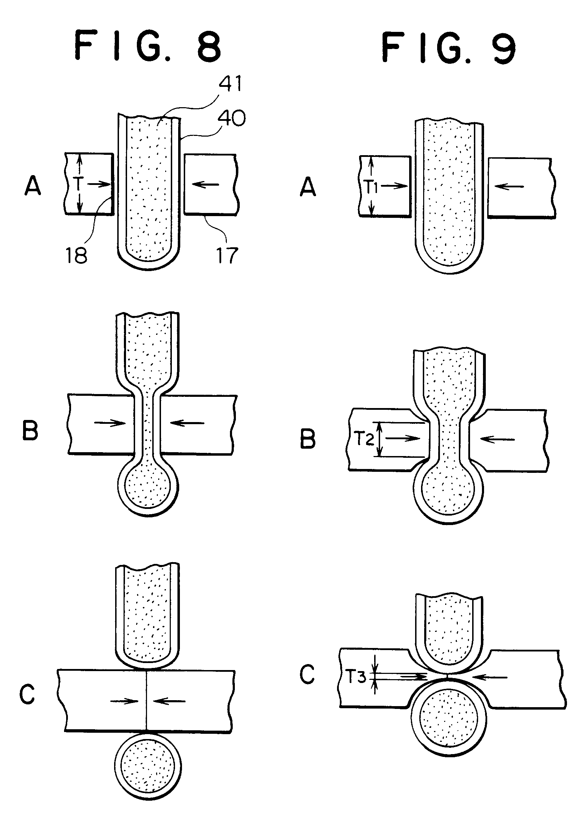

Embodiments of the present invention will now be described, by way of example only, with reference to Figures 1 to 7, 9, 11, 12 and 13 of the accompanying drawings. Figures 8, 10, 14 and 15 show arrangements not in accordance with the present invention but included for a better understanding of the preferred embodiments. Of the drawings:
Fig. 1 is a simplified view of a shutter member for forming an opening to cut a material passing through it,
Fig. 2 is a schematic plan view of the collectively assembled shutter members when the opening is closed,
Fig. 3 is a schematic plan view of the assembled shutter members when the opening is formed,
Fig. 4 is a top view of a base for mounting the shutter assembly,
Fig. 5 is a front view of a cross section of the base,
Fig. 6 is a top view showing a transmission mechanism for driving the shutter members,
Fig. 7 is an enlarged view showing a partial cross section of the base,
Figs. 8, 9, and 10 are schematic cross-sections of the material and shutter members showing, stepwise, the process and effects of cutting a spherical body,
Fig. 11 is a perspective view of bevelled material contacting margins of the first side surface of a shutter member,
Fig. 12 is a perspective view of convex material contacting margins of the first side surface of a shutter member,
Fig. 13 is a partial cross section of the tip of a shutter member with a round convex blade, and
Figs. 14 and 15 are partial cross sections of shutter members with non-symmetrical blade surface.

Referring to Fig. 1, features of a rotatable shutter member 10 constituting part of the shutter mechanism of this embodiment is shown.

Fulcrums B are equidistantly disposed on a circle a with a radius R around the center A. At each fulcrum is positioned a shaft to which the shutter member 10 is pivotally fitted.

The distance between two adjacent fulcrums B₁ and B₂ is represented by a'.

A curve y₁ is an arc of a circle whose radius is equal to the distance a' and whose center x₁ is at the same time located at a distance from the fulcrum B₁ that is equal to the radius R and at a distance from the center A that is equal to the distance a'.

A side surface of each member 10 defined (when the tip 18 of the member is positioned at A) by the curve y₁ constitutes the blade 17 of the shutter member. The blade contacts and cuts a material.

A curve y₂ is an arc of a circle whose radius is equal to the distance a' and whose center x₂ is at the same time located at a distance from the fulcrum B₂ that is equal to the radius R and at a distance from the center A that is equal to the distance a'.

A side surface of each member 10 defined (when the tip 18 of the member is positioned at A) by the curve y₂ is positioned behind the surface defined by the curve y₁, and limits the width of the blade 17 at the tip of the blade.

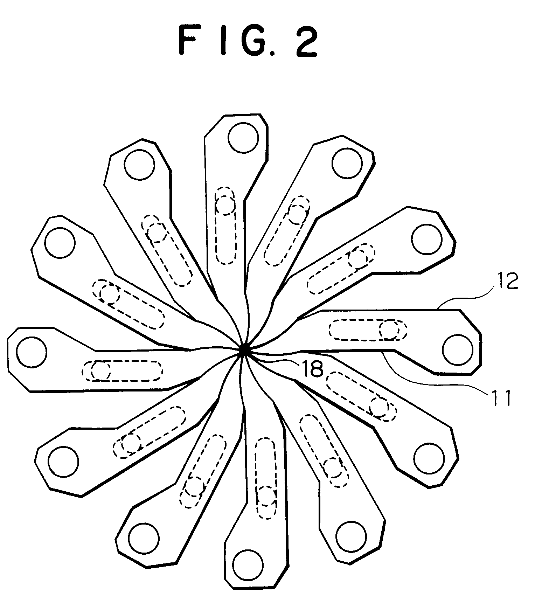

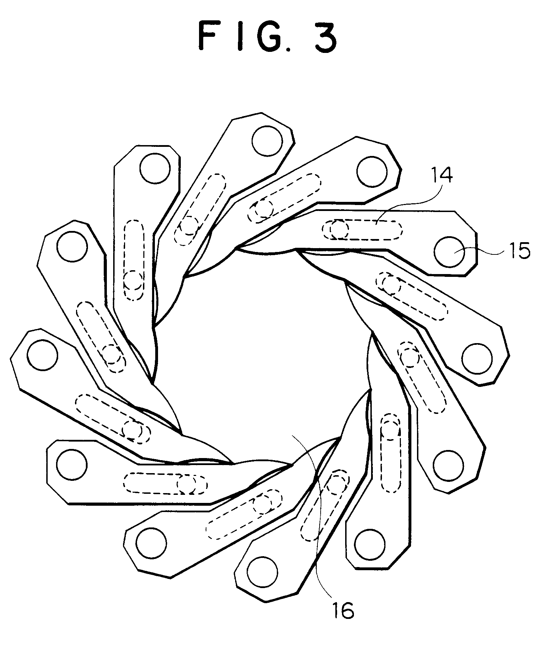

Side surfaces 11 and 12 constituting the neck of the shutter member are formed such that there is no interference among any adjacent shutter members 10 during the course of the rotation of each shutter member 10 from and to the positions shown in Fig. 2, in which the shutter mechanism is closed, and in Fig. 3, in which the members 10 form an opening 16 through which the material to be cut and shaped may be passed. A hole 15 (Fig. 3), into which the fulcrum B is fitted is located at the end of the neck. An elongated hole 14 (Fig. 3) is provided in the middle of the member 10.

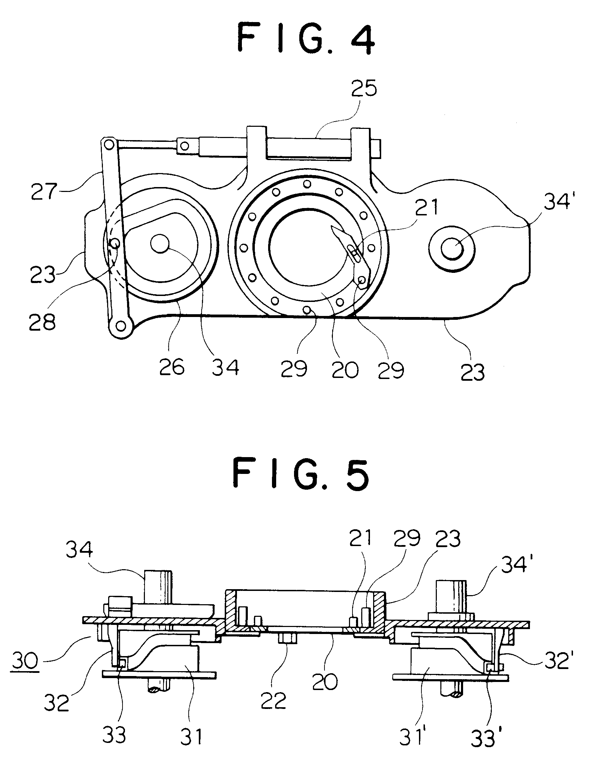

Referring to Figs. 4 - 7, the method of driving the shutter members 10 will now be explained. They are fitted, through the holes 15 provided therein, onto supporting shafts 29 on a base 23. Actuating pins 21 are loosely fitted into the elongated holes 14 of the members 10.

These actuating pins 21 are mounted on an annular rotating plate 20 that fits in the base 23 and slidably rotates on the base.

The rotating plate 20 is driven through a driving pin 22
that is mounted to the bottom thereof, and guided by a guide bar 24 fixed to a rod 25.

One end of the rod 25 is pivoted on one end of an arm 27, the other end of which is pivotally fitted to the base 23.

A cam follower 28 mounted in the middle of the arm 27 engages a groove on a cam 26 that is mounted to, and rotates on, the base 23. The cam 26 is driven by a driving shaft 34 that extends through the left side of the base 23. Therefore, when the driving shaft 34 rotates, the cam 26 moves the cam follower 28 to move the arm 27 and the connected rod 25. The rod 25 causes the guide bar 24 to move so as to actuate the driving pin 22, so that the rotating plate 20 rotates to rotate the shutter members 10.

The base 23 is arranged so that it can move up and down. The driving shaft 34 and its counterpart, a driving shaft 34', symmetrically provided on the right side of the base 23, are equipped with other cams 31 and 31'. Cam followers 33 and 33' mounted on arms 32 and 32' extending from the base 23, are fitted into grooves circumferentially provided on the cams 31 and 31'.

When the cams 31 and 31' rotate, the base 23 goes up and down through the cam followers 33, 33' guided by the cams 31 and 31'.

As above explained, the opening provided by the shutter members is opened and closed through the rotation of the cam 26. This opening and closing movement is synchronized with the up and down movement of the base 23.

Owing to the structure of such rotary shutter members, which do not interfere with each other during their rotation, the restriction on the number of shafts 29 that can be mounted on a frame is reduced, so that, by mounting a large number of shutter members on the frame, forming a product that is almost a sphere has been achieved.

Although the embodiment of this invention shows only twelve shutter members in an assembly, it is obvious that an assembly equipped with more shutter members will be more effective.

The cutting functions and effects of the apparatus of this invention will now be described by referring to Figs. 8-15.

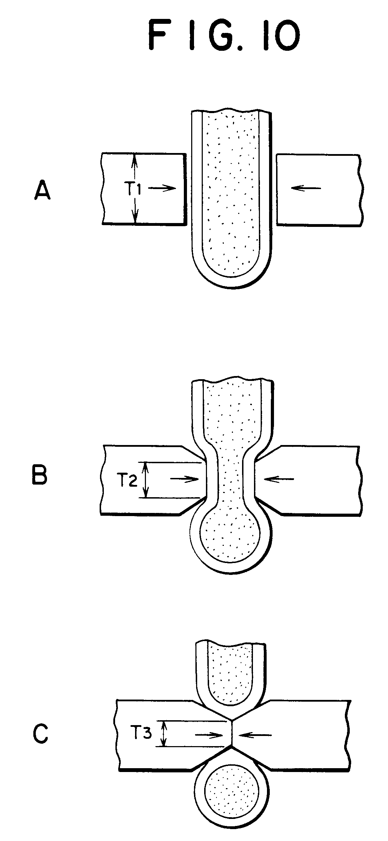

Figs. 8, 9, and 10 show cross-sections of a continuous bar of a two-layer material consisting of a coating 40 of dough with a filling 41. The continuous bar is in contact with the blades 17 of the shutter members, and finally cut off by their tips 18. The thickness T of the tip 18 of the blades may differ, depending on the characteristic of the material to be cut. Fig. 8 shows a blade 17 not in accordance with the invention with a constant thickness T, Fig. 9 shows the blade 17 with the thickness non-equiangularly decreasing toward the tip 18, i.e. the thickness of the blade decreases at a non-uniform rate to the tip, and Fig. 10 shows a blade 17 not in accordance with the invention with the thickness equiangularly decreasing, i.e. decreasing at a uniform rate, toward the tip 18 that has a prescribed thickness T3.

In Figs. 8A, 8B, and 8C the blades contact the coating 40 over a wide area, and move the coating 40 to the center, with the thickness T of the blades kept constant. When the blades all abut each other at the center of the assembly, the moved dough is pressed aside into the upper and lower parts of the bar while completely enveloping the filling 41 at the time of separation. This shape of the shutter member is suitable for cutting and shaping a hard and highly elastic material.

In Fig. 9, the thickness of the blades 17 nonequiangularly decreases toward the tip 18. While the reduction rate in the contact area is set to be large at the early stage of the cutting process, at the later stage it is set to be small, as shown in Figs. 9B and 9C. Namely, the quantity of the moving dough is large when the contact area between the material and the blades is large, and the quantity is small when the contact area is small, so as to provide a uniform thickness of the outer cover to be formed. This shape of the shutter member is particularly effective for materials with thin, soft envelopes.

In other words, if a material to be cut has a thin, soft envelope, the spread of the envelope becomes insufficient at the later stage of the cutting process so that there is a possibility of exposing fillings. To avoid this, at the later stage of the process, the envelope, which has been moved to the central part in a comparatively large quantity, slowly spreads, with the contact area gradually decreasing so as to stabilize the spread of the envelope.

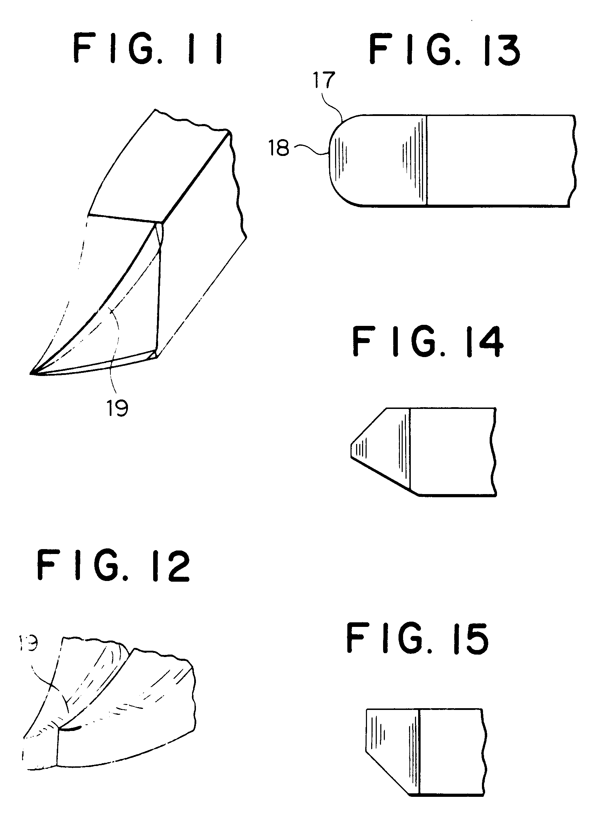

In Fig. 10, the blade thickness of the shutter member constantly decreases toward the tip 18, which has a prescribed thickness. This shape of the shutter member fits soft, comparatively highly elastic materials. Figs. 11 and 12 show the blades of other embodiments of this invention, in which the material contacting margins 19 of the first side surface are bevelled or of convex shape respectively, so that products with smooth, even outer covers result. This is because rough outer covers that are caused by material contacting margins with an acute angle have been eliminated in these embodiments.

If the blade has a round convex curve at the tip as shown in Fig. 13, it has effects similar to those blades shown in Figs. 8 and 10 on materials which require a large quantity of the dough to be moved
Figs. 14 and 15 show blades in which the blades are non-symmetrical about a line perpendicular to the direction of passing the material through the opening 16. Each side edge of these blades angles towards the tip at a different rate from the other. When the upper and lower surfaces have this different angular reduction rate in the contact area, the thickness of the outer covers of the products can be adjusted, if necessary, at the upper, side, or lower part of the products.

As above explained, by providing various shapes of shutter members according to the characteristics of continuous bars comprising a plurality of concentric layers of materials, the apparatus of this invention can produce a substantially spherical product completely covered by an outer cover of a uniform thickness.

The invention provides an improved apparatus for cutting and shaping very sticky cake-like materials to obtain neatly shaped products free from any impediments caused by material adhesion, without the use of any special parting agents or manual powdering.

## Claims

1. Apparatus for cutting and shaping a spherical material, comprising an assembly consisting of a plurality of identically-shaped shutter members (10), pivotally fitted to fulcrums (B) that are equidistantly disposed on a circle (a) so that the members form an opening (16) at the center (A) of the circle (a) when each member pivots away from the center (A) of the circle, and the members close the opening (16) when each member pivots towards the center (A) of the circle (a), thereby to cut and shape material passing through the opening (16), wherein each of the members (10) has first (y₁) and second (y₂) curved side surfaces that are opposite to each other, and abut each other at a tip (18) positioned at the opposite end of the member to its fulcrum (B), the first curved surface (y₁) in use contacting the material passing through the opening, characterised by both the first (y₁) and the second (y₂) curved side surfaces being so defined that each of them is an arc of a circle with a radius equal to the distance between adjacent fulcrums (B), and when the tip (18) of each member is at the center (A) of the fulcrum circle (a), the center (x₁) of the arc of the first curved side surface (y₁) of each member is at the same time located at a distance from the member's fulcrum (B₁) equal to the radius of the fulcrum circle and at a distance from the center (A) of the fulcrum circle equal to the distance between adjacent fulcrums, and the center (x₂) of the arc of the second curved side surface (y₂) is at the same time located at a distance from the fulcrum (B₂) of the next member, in the direction going from the first (y₁) to the second (y₂) side surfaces, equal to the radius of the fulcrum circle and at a distance from the center (A) of the fulcrum circle (16) equal to the distance between adjacent fulcrums (B), said members (10) being associated with each other such that when the members (10) make a pivotal movement, the part near the tip of the second curved side surface (y₂) of each member slides over the first curved side surface (y₁) of an adjacent member, the thickness of the first side surface decreasing towards its tip at a non-uniform rate.

2. Apparatus according to claim 1, wherein the first side surface (y₁) has a predetermined thickness at the tip.

3. Apparatus according to any preceding claim, wherein the thickness of the first side surface (y₁) decreases at a slower rate nearer to the tip.

4. Apparatus according to any preceding claim, wherein the first side surface (y₁) is symmetrical about a line perpendicular to the direction of the material passing through the opening.

5. Apparatus according to any of claims 1 to 3, wherein the first side surface (y₁) is non-symmetrical about a line perpendicular to the direction of the material passing through the opening.

6. Apparatus according to claim 1 or 2, wherein the thickness of the first side surface (y₁) decreases convexly near the tip.

7. Apparatus according to any preceding claim, wherein the material contacting margins of the first side surface (y₁) are bevelled.

8. Apparatus according to any of claims 1 to 5, wherein the material contacting margins of the first side surface (y₁) have convex cross-sections.

## Patentansprüche

1. Vorrichtung zum Schneiden und Formen eines sphärischen Materials, aufweisend eine Anordnung, die aus einer Vielzahl von gleichgeformten Verschlußgliedern (10) besteht, die dreh- bzw. schwenkbar an Gelenkpunkten (B) befestigt sind, die mit gleichem Abstand auf einem Kreis (a) derartig angeordnet sind, daß die Glieder eine Öffnung (16) in der Mitte (A) des Kreises (a) bilden, wenn jedes Glied von der Mitte (A) des Kreises wegbewegt ist, und die Öffnung (16) durch die Glieder verschlossen ist, wenn jedes Glied zu der Mitte (A) des Kreises (a) hingeschwenkt bzw. hingedreht ist, so daß durch die Öffnung (16) gelangendes Material geschnitten und geformt wird, wobei jedes der Glieder (10) erste (y₁) und zweite (y₂) gekrümmte Seitenflächen hat, die einander gegenüberliegen und sich an einer Spitze (18) treffen bzw. aneinanderstoßen, die an dem dem Drehpunkt (B) des Gliedes gegenüberliegenden Ende des Gliedes angeordnet ist, wobei die erste gekrümmte Oberfläche (y₁) während des Betriebs das durch die Öffnung gelangende Material berührt, dadurch gekennzeichnet, daß sowohl die erste (y₁) als auch die zweite (y₂) gekrümmte Seitenfläche so festgelegt sind, daß jede von Ihnen einen Kreisbogen mit einem Radius gleich dem Abstand zwischen nebeneinander liegenden Drehpunkten (B) bildet, und daß, wenn die Spitze (18) jedes Gliedes in der Mitte (A) des Drehpunktkreises (a) liegt, der Mittelpunkt (x₁) des Bogens der ersten gekrümmten Seitenfläche (y₁) jedes Gliedes gleichzeitig mit einem Abstand von dem Drehpunkt (B₁) des Gliedes, der gleich dem Radius des Drehpunktkreises ist, und mit einem Abstand von der Mitte (A) des Drehpunktkreises angeordnet ist, der gleich dem Abstand zwischen nebeneinander liegenden Drehpunkten ist, und wobei der Mittelpunkt (x₂) des Bogens der zweiten gekrümmten Seitenfläche (y₂) gleichzeitig mit einem Abstand von dem Drehpunkt (B₂) des nächsten Gliedes angeordnet ist, der in der Richtung, die von der ersten (y₁) zu der zweiten (y₂) Seitenfläche verläuft, gleich dem Radius des Drehpunktkreises ist, und mit einem Abstand von der Mitte des Drehpunktkreises (16) angeordnet ist, der gleich dem Abstand zwischen nebeneinander liegenden Drehpunkten (B) ist, wobei die Glieder (10) miteinander derartig in Beziehung stehen, daß, wenn die Glieder (10) eine Dreh- bzw. Schwenkbewegung machen, der Teil nahe der Spitze der zweiten gekrümmten Seitenfläche (y₂) jedes Gliedes über die erste gekrümmte Seitenfläche (y₁) eines daneben liegenden Gliedes gleitet, wobei die Dicke der ersten Seitenfläche zu ihrer Spitze hin in einem nicht gleichmäßigen Maße abnimmt.

2. Vorrichtung nach Anspruch 1, wobei die erste Seitenfläche (Y₁) an der Spitze eine vorbestimmte Dicke hat.

3. Vorrichtung nach einem der vorangegangenen Ansprüche, wobei die Dicke der ersten Seitenfläche (y₁) näher zu der Spitze hin in einem langsameren Maße abnimmt.

4. Vorrichtung nach einem der vorangegangenen Ansprüche, wobei die erste Seitenfläche (y₁) bezüglich einer senkrecht zu der Richtung des durch die Öffnung gelangenden Materials verlaufenden Linie symmetrisch ist.

5. Vorrichtung nach einem der Ansprüche 1 bis 3, wobei die erste Seitenfläche (y₁) bezüglich einer Linie senkrecht zu der Richtung des durch die Öffnung gelangenden Materials nicht symmetrisch ist.

6. Vorrichtung nach Anspruch 1 oder 2, wobei die Dicke der ersten Seitenfläche (y₁) nahe der Spitze konvex abnimmt.

7. Vorrichtung nach einem der vorangegangenen Ansprüche, wobei die das Material berührenden Ränder der ersten Seitenfläche (y₁) abgeschrägt sind.

8. Vorrichtung nach einem der Ansprüche 1 bis 5, wobei das den Rand der ersten Seitenfläche (y₁) berührende Material einen konvexen Querschnitt bzw. konvexe Querschnittsbereiche aufweist.

## Revendications

1. Appareil de coupe et de façonnage d'une matière sphérique, comportant un assemblage constitué de plusieurs éléments (10) d'obturateur de formes identiques, montés de façon pivotante sur des pivots (A) qui sont disposés à égale distance les uns des autres sur un cercle (a) afin que les éléments forment une ouverture (16) au centre (A) du cercle (a) lorsque chaque élément s'éloigne en pivotant du centre (A) du cercle, et que les éléments ferment l'ouverture (16) lorsque chaque élément se rapproche en pivotant du centre (A) du cercle (a), afin de couper et de façonner une matière passant dans l'ouverture (16), chacun des éléments (10) ayant des première (y₁) et seconde (y₂) surfaces latérales incurvées qui sont opposées l'une à l'autre et qui se rejoignent à une pointe (18) positionnée à l'extrémité de l'élément opposée à son pivot (B), la première surface incurvée (y₁), lors de l'utilisation, étant en contact avec la matière passant dans l'ouverture, caractérisé en ce que les première (y₁) et seconde (y₂) surfaces latérales sont toutes deux définies de manière que chacune d'elles suive un arc de cercle d'un rayon égal à la distance entre des pivots adjacents (B), et lorsque la pointe (12) de chaque élément est au centre (A) du cercle (a) des pivots, le centre (x₁) de l'arc de la première surface latérale incurvée (y₁) de chaque élément est situé en même temps à une distance du pivot (B₁) de l'élément égale au rayon du cercle des pivots et à une distance du centre (A) du cercle des pivots égale à la distance comprise entre des pivots adjacents, et le centre (x₂) de l'arc de la seconde surface latérale incurvée (y₂) est situé en même temps à une distance du pivot (B₂) de l'élément suivant, dans le sens allant de la première (y₁) à la seconde (y₂) surface latérale, égale au rayon du cercle des pivots et à une distance du centre (A) du cercle (16) des pivots égale à la distance comprise entre des pivots adjacents (B) lesdits éléments (10) étant associés les uns aux autres de manière que, lorsque les éléments (10) effectuent un mouvement de pivotement, la partie proche de la pointe de la seconde surface latérale incurvée (y₂) de chaque élément glisse sur la première surface latérale incurvée (y₁) d'un élément adjacent, l'épaisseur de la première surface latérale diminuant vers sa pointe à un rythme non uniforme.

2. Appareil selon la revendication 1, dans lequel la première surface latérale (y₁) a une épaisseur prédéterminée à la pointe.

3. Appareil selon l'une quelconque des revendications précédentes, dans lequel l'épaisseur de la première surface latérale (y₁) diminue à un rythme plus lent vers la pointe.

4. Appareil selon l'une quelconque des revendications précédentes, dans lequel la première surface latérale (y₁) est symétrique par rapport à une ligne perpendiculaire à la direction de la matière passant dans l'ouverture.

5. Appareil selon l'une quelconque des revendications 1 à 3, dans lequel la première surface latérale (y₁) est non symétrique par rapport à une ligne perpendiculaire à la direction de la matière passant dans l'ouverture.

6. Appareil selon la revendication 1 ou 2, dans lequel l'épaisseur de la première surface latérale (y₁) diminue de façon convexe vers la pointe.

7. Appareil selon l'une quelconque des revendications précédentes, dans lequel les marges, entrant en contact avec la matière, de la première surface latérale (y₁) sont biseautées.

8. Appareil selon l'une quelconque des revendications 1 à 5, dans lequel les marges, entrant en contact avec la matière, de la première surface latérale (y₁) ont des sections transversales convexes.
